# EUROPEAN PATENT SPECIFICATION

(11) **EP 4 538 961 B1**
(45) Date of publication and mention of the grant of the patent: **25.11.2026**
(21) Application number: 24199166.0
(22) Date of filing: 09.09.2024
(51) Int. Cl.: G06T 5/60, G06T 5/70

(54) **UNSUPERVISED CALIBRATION OF TEMPORAL NOISE REDUCTION FOR VIDEO**
UNÜBERWACHTE KALIBRIERUNG DER ZEITLICHEN RAUSCHVERMINDERUNG FÜR VIDEO
ÉTALONNAGE NON SUPERVISÉ DE RÉDUCTION DE BRUIT TEMPOREL POUR VIDÉO

(30) Priority: 13.10.2023 US 202318486554
(43) Date of publication of application: 16.04.2025
(73) Proprietor: INTEL Corporation, Santa Clara, CA 95054 (US)
(72) Inventor: Elron, Noam, 6813657 Tel Aviv TA (IL)
(74) Representative: Samson & Partner Patentanwälte mbB

(56) References cited:
- ZAINULINA ELVIRA ET AL: "No-Reference Denoising Of Low-Dose Ct Projections", 2021 IEEE 18TH INTERNATIONAL SYMPOSIUM ON BIOMEDICAL IMAGING (ISBI), IEEE, 13 April 2021 (2021-04-13), pages 77 - 81, XP033917778, DOI: 10.1109/ISBI48211.2021.9433825
- SIMON MEISTER ET AL: "UnFlow: Unsupervised Learning of Optical Flow with a Bidirectional Census Loss", ARXIV.ORG, CORNELL UNIVERSITY LIBRARY, 201 OLIN LIBRARY CORNELL UNIVERSITY ITHACA, NY 14853, 21 November 2017 (2017-11-21), XP081300942
- CHU MENGYU ET AL: "Learning temporal coherence via self-supervision for GAN-based video generation", ACM TRANSACTIONS ON GRAPHICS, ACM, NY, US, vol. 39, no. 4, 8 July 2020 (2020-07-08), pages 75:1 - 75:13, XP059023243, ISSN: 0730-0301, DOI: 10.1145/3386569.3392457
- LI JUNYI ET AL: "Unidirectional Video Denoising by Mimicking Backward Recurrent Modules with Look-Ahead Forward Ones", 23 October 2022, SPRINGER INTERNATIONAL PUBLISHING, PAGE(S) 592 - 609, XP047638937
- ZHAOMING KONG ET AL: "A Comparison of Image Denoising Methods", ARXIV.ORG, CORNELL UNIVERSITY LIBRARY, 201 OLIN LIBRARY CORNELL UNIVERSITY ITHACA, NY 14853, 9 May 2023 (2023-05-09), XP091504734

## Description

### Technical Field

This disclosure relates generally to calibration of temporal noise reduction, and in particular to unsupervised calibration of deep learning models for temporal noise reduction.

### Background

Temporal noise reduction can be used to decrease noise in video streams. Noisy video image streams can appear jittery. While image portions with static objects can be averaged over time, averaging moving objects can result in a smearing and/or ghosting effect. Temporal noise reducers can incorporate a classifier that determines whether information can or cannot be averaged. In particular, a temporal noise reduction (TNR) classifier can determine which portions of video images can be averaged for temporal noise reduction, and which portions of video images cannot be averaged.

Publication "No-Reference Denoising Of Low-Dose Ct Projections" to Zainulina Elvira et al. (2021 IEEE 18th International Symposium on Biomedical Imaging ISBI) presents a self-supervised de-noising method for sequence of projection images, it processes the images in two opposite directions, forward and backward. It exploits the information redundancy in (spatial) sequence of images.

### Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.
Figure (FIG.) 1 illustrates a DNN system, in accordance with various embodiments.
FIG. 2 illustrates an example overview of a TNR framework that can be used for calibration and/or training, in accordance with various embodiments.
FIG. 3 illustrates an example schematic of a TNR module, in accordance with various embodiments.
FIGS. 4A and 4B are examples of two consecutive frames including a moving object as well as stationary objects, in accordance with various embodiments.
FIG. 4C is an example of a TNR blend map (also known as an alpha map) produced by a TNR, in accordance with various embodiments.
FIGS. 5A and 5B illustrate the different ghosting patterns in time-forward versus time-reversed TNR processing, in accordance with various embodiments.
FIG. 6 illustrates a schematic of an example TNR that can be calibrated online, in accordance with various embodiments.
FIG. 7 is a flowchart showing a method of TNR calibration, in accordance with various embodiments.
FIG. 8 is a block diagram of an example computing device, in accordance with various embodiments.

### Detailed Description

### Overview

Temporal noise reduction is a core feature of a video processing pipeline, where TNR can be used to decrease noise in video streams. Temporal noise reducers (TNRs) can incorporate a classifier that determines which portions of video images can be averaged for temporal noise reduction, and which portions of video images cannot be averaged. A TNR classifier can be based on deep-learning (DL) techniques, and DL-based TNR classifiers are generally trained using a dataset of high-quality videos with added artificial noise. A TNR classifier is then trained to reproduce the original video from the source containing artificial noise. However, it is difficult to create artificial noise with fidelity to a specific signal source (e.g., a specific camera module) and thus, a TNR classifier calibrated using artificial noise generates sub-optimal results for the use-case it will serve. Techniques are presented herein for training DL-based TNR classifiers so that the TNR can be tailored to the noise statistics of a particular use-case. Additionally, methods described herein can be used for calibrating parameters of non-artificial intelligence TNR algorithms.

Systems and methods are provided for an unsupervised technique for training a DL-based TNR on unlabeled real-world data. The unsupervised technique can also be used to calibrate the free parameters of a TNR based on algorithmic principles. An unsupervised technique generally refers to a technique in which the training is based on actual real-world video (which may include noise), and not based on video containing artificial or added noise. Using the unsupervised technique to train a TNR allows the TNR to be tailored to the noise statistics of the use-case. In some examples, the use-case can be a specific camera module. Tailoring the TNR to the noise statistics of the use-case results in the provision of high quality video with minimal resources.

In various examples, the systems and methods discussed herein are based on an uncalibrated TNR's output in time-reverse, as well as the uncalibrated TNR's output in time-forward. A time-reverse order is a series of output frames in time-reverse or backwards order (e.g., time t, time t-1, time t-2, time t-3, etc., where 1,2,3, etc. are a period of time such as 1ms, 2ms, 3ms). Thus, in time-reverse order, the output frames are considered in reverse order from when the frames were captured (e.g., from present to past, or from past to earlier past). A time-forward order is a series of output frames in time-forwards or sequential order (e.g., time t, time t+1, time t+2, time t+3, etc., where 1, 2, 3, etc. are a period of time such as 1ms, 2ms, 3ms). In some examples, for example for calibration of live video, the frames used for both the time-forward output and the time-reversed output can be frames from the past. The frames have a sequence in which the frames were captured, and the sequence can be considered sequentially (older-to-newer) in time-forward order and/or the sequence can be considered from newer-to-older frames in time-reverse order. Techniques are described for calibrating a TNR to minimize the difference between its time-forward output and its time-reversed output. The unsupervised training (or calibration) can be performed on unlabeled real-world data. Thus, the training (or calibration) can be tailored to the noise-profile of specific conditions, providing better trade-off of video quality versus resources (e.g., die area, compute-power, etc.).

A DL-based TNR can be based on a deep neural network (DNN). The training process for a DNN usually has two phases: the forward pass and the backward pass. While traditional DNNs include input training samples with ground-truth labels (e.g., known or verified labels), the training data for the DL-based TNR described herein is unlabeled. Instead, in the forward pass, unlabeled, real-world video is input to a DL-based TNR, and processed using the TNR parameters of the DNN to produce two different model-generated outputs: a first time-forward model-generated output and a second time-reversed model-generated output. In the backward pass, the first model-generated output is compared to the second model-generated output, and the internal TNR parameters are adjusted to minimize differences between the first and second outputs. After the DNN is trained, the DNN can be used for various tasks through inference. Inference makes use of the forward pass to produce model-generated output for unlabeled real-world data.

For purposes of explanation, specific numbers, materials, and configurations are set forth in order to provide a thorough understanding of the illustrative implementations. However, it will be apparent to one skilled in the art that the present disclosure may be practiced without the specific details or/and that the present disclosure may be practiced with only some of the described aspects. In other instances, well known features are omitted or simplified in order not to obscure the illustrative implementations.

Further, references are made to the accompanying drawings that form a part hereof, and in which is shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A and/or B" or the phrase "A or B" means (A), (B), or (A and B). For the purposes of the present disclosure, the phrase "A, B, and/or C" or the phrase "A, B, or C" means (A), (B), (C), (A and B), (A and C), (B and C), or (A, B, and C). The term "between," when used with reference to measurement ranges, is inclusive of the ends of the measurement ranges.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value based on the input operand of a particular value as described herein or as known in the art. Similarly, terms indicating orientation of various elements, e.g., "coplanar," "perpendicular," "orthogonal," "parallel," or any other angle between the elements, generally refer to being within +/- 5-20% of a target value based on the input operand of a particular value as described herein or as known in the art.

In addition, the terms "comprise," "comprising," "include," "including," "have," "having" or any other variation thereof, are intended to cover a non-exclusive inclusion. For example, a method, process, device, or system that comprises a list of elements is not necessarily limited to only those elements but may include other elements not expressly listed or inherent to such method, process, device, or systems. Also, the term "or" refers to an inclusive "or" and not to an exclusive "or."

The systems, methods, and devices of this disclosure each have several innovative aspects, no single one of which is solely responsible for all desirable attributes disclosed herein. Details of one or more implementations of the subject matter described in this specification are set forth in the description below and the accompanying drawings.

### Example DNN System

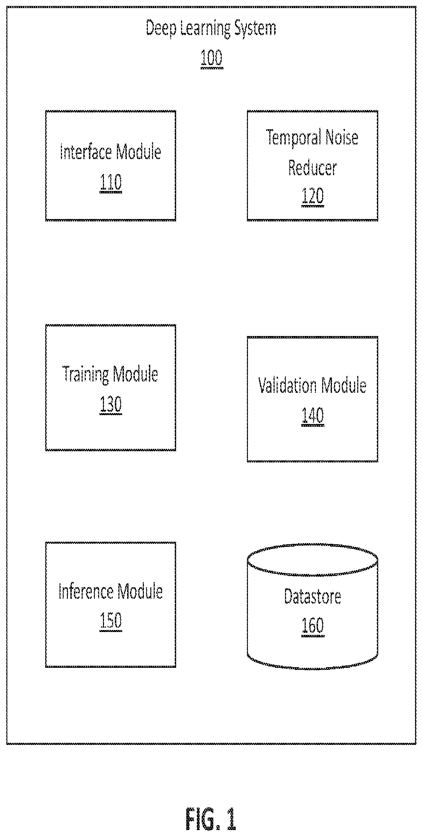

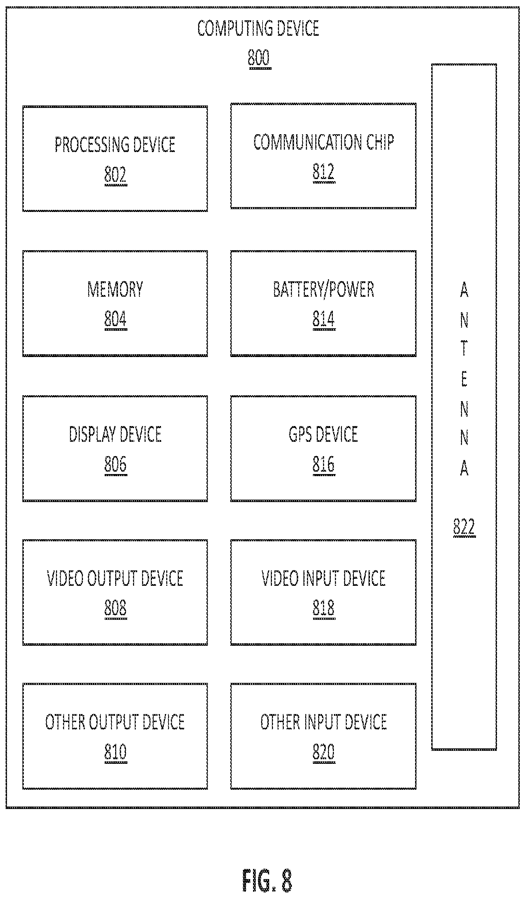

FIG. 1 is a block diagram of an example DNN system 100, in accordance with various embodiments. The DNN system 100 trains DNNs for various tasks, including temporal noise reduction of video streams. The DNN system 100 includes an interface module 110, a TNR 120, a training module 130, a validation module 140, an inference module 150, and a datastore 160. In other embodiments, alternative configurations, different or additional components may be included in the DNN system 100. Further, functionality attributed to a component of the DNN system 100 may be accomplished by a different component included in the DNN system 100 or a different system. The DNN system 100 or a component of the DNN system 100 (e.g., the training module 130 or inference module 150) may include the computing device 800 in FIG. 8.

The interface module 110 facilitates communications of the DNN system 100 with other systems. As an example, the interface module 110 supports the DNN system 100 to distribute trained DNNs to other systems, e.g., computing devices configured to apply DNNs to perform tasks. As another example, the interface module 110 establishes communications between the DNN system 100 with an external database to receive data that can be used to train DNNs or input into DNNs to perform tasks. In some embodiments, data received by the interface module 110 may have a data structure, such as a matrix. In some embodiments, data received by the interface module 110 may be an image, a series of images, and/or a video stream.

The temporal noise reducer (TNR) 120 performs temporal noise reduction on video images. The TNR 120 performs temporal noise reduction on real-world videos. In general, the TNR reviews the input data, identifies moving objects, and determines which portions of a video image can be merged and which portions of a video image cannot be merged. In general, portions of a video image with moving objects cannot be merged. In some examples, the input to a TNR is a current input frame and a previous output frame, where a previous output frame is a blend of multiple previous input frames. During training, the TNR 120 can use both past and future video images. Given a sequence of video frames, two instances of the TNR are applied: the first instance operating on past frames and the second instance operating on future frames. Differences between the outputs of the first and second instances can be signs of TNR failure, and the TNR is thus calibrated to minimize the difference between the outputs of first instance and the second instance. During inference operations, the TNR 120 can operate on real-world videos using past and present images in time-reverse and time-forward order, where the first instance can operate on a select number of frames in time-reverse order and the second instance can operate on the select number of frames in time-forward order. In various examples, when a TNR operates on frames time-reverse order, the series of output frames are considered from newer-to-older or backwards order (e.g., time t, time t-1, time t-2, time t-3, etc., where 1,2,3, etc. are a period of time such as 1ms, 2ms, 3ms). Thus, in time-reverse order, the output frames are considered in reverse order from when the frames were captured (e.g., from newer to older, from present to past, and/or from past to earlier past). When a TNR operates on frames in a time-forward order, the series of output frames are considered from older-to-newer or in sequential order (e.g., time t, time t+1, time t+2, time t+3, etc., where 1, 2, 3, etc. are a period of time such as 1ms, 2ms, 3ms). In general, the frames of a video feed have a sequence in which the frames were captured, and the sequence can be considered sequentially (from older frames to newer frames) in time-forward order and/or the sequence can be considered backwards (from newer frames to older frames) frames in time-reverse order.

The training module 130 trains DNNs by using training datasets. In some embodiments, a training dataset for training a DNN may include one or more images and/or videos, each of which may be a training sample. In some examples, the training module 130 trains the TNR 120. The training module 130 may receive real-world video data for processing with the temporal noise reducer 120 as described herein. In some embodiments, the training module 130 may input different data into different layers of the DNN. For every subsequent DNN layer, the input data may be less than the previous DNN layer. The training module 130 may adjust internal parameters of the DNN to minimize a difference between the video processed by the DNN with time-forward temporal noise reduction at the TNR 120 and the video processed by the DNN with time-reversal temporal noise reduction at the TNR 120. In some examples, the difference can be the different between corresponding output frames in the video processed by the DNN with time-forward temporal noise reduction at the TNR 120 and the video processed by the DNN with time-reversal temporal noise reduction at the TNR 120. In some examples, the difference between corresponding output frames can be measured as the number of pixels in the corresponding output frames that are different from each other. In some examples, the difference between corresponding output frames can be measured using a loss function, as described below.

In some embodiments, a part of the training dataset may be used to initially train the DNN, and the rest of the training dataset may be held back as a validation subset used by the validation module 140 to validate performance of a trained DNN. The portion of the training dataset not including the tuning subset and the validation subset may be used to train the DNN.

The training module 130 also determines hyperparameters for training the DNN. Hyperparameters are variables specifying the DNN training process. Hyperparameters are different from parameters inside the DNN (e.g., weights of filters). In some embodiments, hyperparameters include variables determining the architecture of the DNN, such as number of hidden layers, etc. Hyperparameters also include variables which determine how the DNN is trained, such as batch size, number of epochs, etc. A batch size defines the number of training samples to work through before updating the parameters of the DNN. The batch size is the same as or smaller than the number of samples in the training dataset. The training dataset can be divided into one or more batches. The number of epochs defines how many times the entire training dataset is passed forward and backwards through the entire network. The number of epochs defines the number of times that the deep learning algorithm works through the entire training dataset. One epoch means that each training sample in the training dataset has had an opportunity to update the parameters inside the DNN. An epoch may include one or more batches. The number of epochs may be 1, 10, 50, 100, or even larger.

The training module 130 defines the architecture of the DNN, e.g., based on some of the hyperparameters. The architecture of the DNN includes an input layer, an output layer, and a plurality of hidden layers. The input layer of an DNN may include tensors (e.g., a multidimensional array) specifying attributes of the input image, such as the height of the input image, the width of the input image, and the depth of the input image (e.g., the number of bits specifying the color of a pixel in the input image). The output layer includes labels of objects in the input layer. The hidden layers are layers between the input layer and output layer. The hidden layers include one or more convolutional layers and one or more other types of layers, such as pooling layers, fully connected layers, normalization layers, softmax or logistic layers, and so on. The convolutional layers of the DNN abstract the input image to a feature map that is represented by a tensor specifying the feature map height, the feature map width, and the feature map channels (e.g., red, green, blue images include 3 channels). A pooling layer is used to reduce the spatial volume of input image after convolution. It is used between 2 convolution layers. A fully connected layer involves weights, biases, and neurons. It connects neurons in one layer to neurons in another layer. It is used to classify images between different categories by training.

In the process of defining the architecture of the DNN, the training module 130 also adds an activation function to a hidden layer or the output layer. An activation function of a layer transforms the weighted sum of the input of the layer to an output of the layer. The activation function may be, for example, a rectified linear unit activation function, a tangent activation function, or other types of activation functions.

After the training module 130 defines the architecture of the DNN, the training module 130 inputs a training dataset into the DNN. The training dataset includes a plurality of training samples. An example of a training dataset includes a series of images of a video stream. Unlabeled, real-world video is input to the TNR, and processed using the TNR parameters of the DNN to produce two different model-generated outputs: a first time-forward model-generated output and a second time-reversed model-generated output. In the backward pass, the training module 130 modifies the parameters inside the DNN ("internal parameters of the DNN") to minimize the differences between the first model-generated output is and the second model generated output. The internal parameters include weights of filters in the convolutional layers of the DNN. In some embodiments, the training module 130 uses a cost function to minimize the differences.

The training module 130 may train the DNN for a predetermined number of epochs. The number of epochs is a hyperparameter that defines the number of times that the deep learning algorithm will work through the entire training dataset. One epoch means that each sample in the training dataset has had an opportunity to update internal parameters of the DNN. After the training module 130 finishes the predetermined number of epochs, the training module 130 may stop updating the parameters in the DNN. The DNN having the updated parameters is referred to as a trained DNN.

The validation module 140 verifies accuracy of trained DNNs. In some embodiments, the validation module 140 inputs samples in a validation dataset into a trained DNN and uses the outputs of the DNN to determine the model accuracy. In some embodiments, a validation dataset may be formed of some or all the samples in the training dataset. Additionally or alternatively, the validation dataset includes additional samples, other than those in the training sets. In some embodiments, the validation module 140 may determine an accuracy score measuring the precision, recall, or a combination of precision and recall of the DNN. The validation module 140 may use the following metrics to determine the accuracy score: Precision = TP / (TP + FP) and Recall = TP / (TP + FN), where precision may be how many the reference classification model correctly predicted (TP or true positives) out of the total it predicted (TP + FP or false positives), and recall may be how many the reference classification model correctly predicted (TP) out of the total number of objects that did have the property in question (TP + FN or false negatives). The F-score (F-score = 2 * PR / (P + R)) unifies precision and recall into a single measure.

The validation module 140 may compare the accuracy score with a threshold score. In an example where the validation module 140 determines that the accuracy score of the augmented model is lower than the threshold score, the validation module 140 instructs the training module 130 to re-train the DNN. In one embodiment, the training module 130 may iteratively re-train the DNN until the occurrence of a stopping condition, such as the accuracy measurement indication that the DNN may be sufficiently accurate, or a number of training rounds having taken place.

The inference module 150 applies the trained or validated DNN to perform tasks. The inference module 150 may run inference processes of a trained or validated DNN. In some examples, inference makes use of the forward pass to produce model-generated output for unlabeled real-world data. For instance, the inference module 150 may input real-world data into the DNN and receive an output of the DNN. The output of the DNN may provide a solution to the task for which the DNN is trained for.

The inference module 150 may aggregate the outputs of the DNN to generate a final result of the inference process. In some embodiments, the inference module 150 may distribute the DNN to other systems, e.g., computing devices in communication with the DNN system 100, for the other systems to apply the DNN to perform the tasks. The distribution of the DNN may be done through the interface module 110. In some embodiments, the DNN system 100 may be implemented in a server, such as a cloud server, an edge service, and so on. The computing devices may be connected to the DNN system 100 through a network. Examples of the computing devices include edge devices.

The datastore 160 stores data received, generated, used, or otherwise associated with the DNN system 100. For example, the datastore 160 stores video processed by the TNR 120 or used by the training module 130, validation module 140, and the inference module 150. The datastore 160 may also store other data generated by the training module 130 and validation module 140, such as the hyperparameters for training DNNs, internal parameters of trained DNNs (e.g., values of tunable parameters of activation functions, such as Fractional Adaptive Linear Units (FALUs)), etc. In the embodiment of FIG. 1, the datastore 160 is a component of the DNN system 100. In other embodiments, the datastore 160 may be external to the DNN system 100 and communicate with the DNN system 100 through a network.

### Example TNR Framework

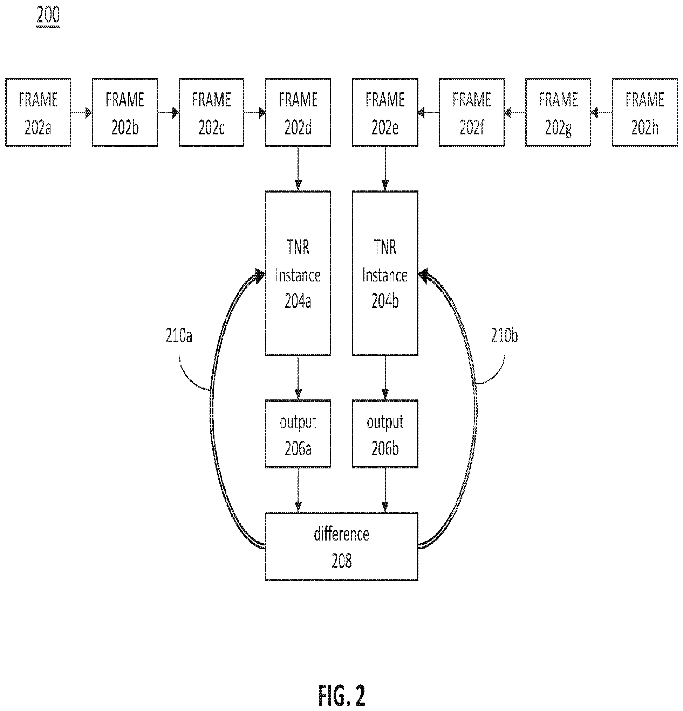

FIG. 2 illustrates an example overview of a TNR framework 200 that can be used for calibration and/or training, in accordance with various embodiments. The TNR framework 200 illustrates an example in which a TNR receives a sequence of video frames 202a-202h, and two instances of the TNR are applied to the sequence of video frames. In various examples, the two instances of the TNR both use the same TNR parameters. In particular, a first instance of the TNR 204a operates on a first set of frames 202a-202d, and a second instance of the TNR 204b operates on a second set of frames 202e-202h. The first instance of the TNR 204a outputs a first output 206a and the second instance of the TNR 204b outputs a second output 206b. The difference 208 between the first output 206a and the second output 206b is measured, and, based on the difference 208, TNR parameters are adjusted to minimize the difference, as illustrated by the feedback arrows 210a, 210b.

In some examples, the video frames 202a-202h are pre-recorded training frames, and the first set of frames 202a-202d include frames n-3, n-2, n-1, and n, while the second set of frames include frames n+1, n+2, n+3, n+4 (where n is the present time). Thus, in this example, the first instance of the TNR 204a processes past and present frames while the second instance of the TNR 204b processes future frames. The output from these two instances can be compared to measure the difference, and TNR parameters can be adjusted to minimize the difference 208.

In other examples, the first instance of the TNR 204a may receive a current input frame and a previous output frame, operate on the current input frame and the previous output frame, and output the first output. Similarly, in some examples, the second instance of the TNR 204b may receive a current input frame and a previous output frame, operate on the current input frame and the previous output frame, and output the second output.

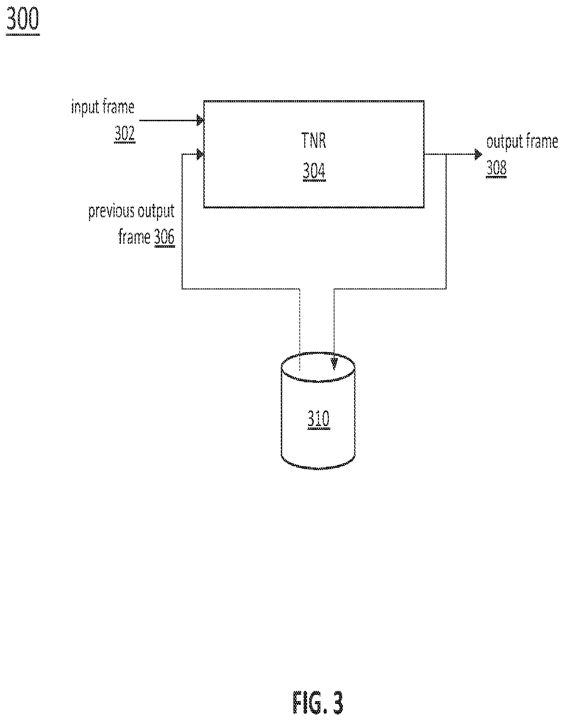

FIG. 3 illustrates an example schematic 300 of a TNR module 304, in accordance with various embodiments. As shown in FIG. 3, an input frame 302 is input to the TNR module 304. Additionally, a previous output frame 306 is input to the TNR module 304. A memory 310 stores the output, and previous output, such as the previous output frame 306 can be accessed from the memory 310. The TNR module 304 blends the input and the previous output to generate an output frame 308. In some examples, a blend factor α can be used to generate the output frame 308. The blend factor can vary for different regions of the input frame. In one example, a portion of the output frame can be determined using the following equation: $out = \left(1-α\right) * in + α * prev_out$ where *in* is the input frame 302 and *prev_out* is the previous output frame 306. In various examples, the blend factor α is content dependent, such that regions in the frame that are similar to the previous frame (after rectification) will have a high blend factor α. Similarly, regions in which the current frame is different from the previous frame will have a low blend factor α. For example, a region that was occluded in a previous frame and is revealed in the current input frame, due to motion of an object, will have a blend factor α equal to about zero. Thus, in the equation above, "out" can be a portion of the output frame with the "in" and "prev_out" representing corresponding portions of the input frame and previous output frame. Note that TNRs can include additional features, such as motion compensation of the previous output to rectify it with the current view.

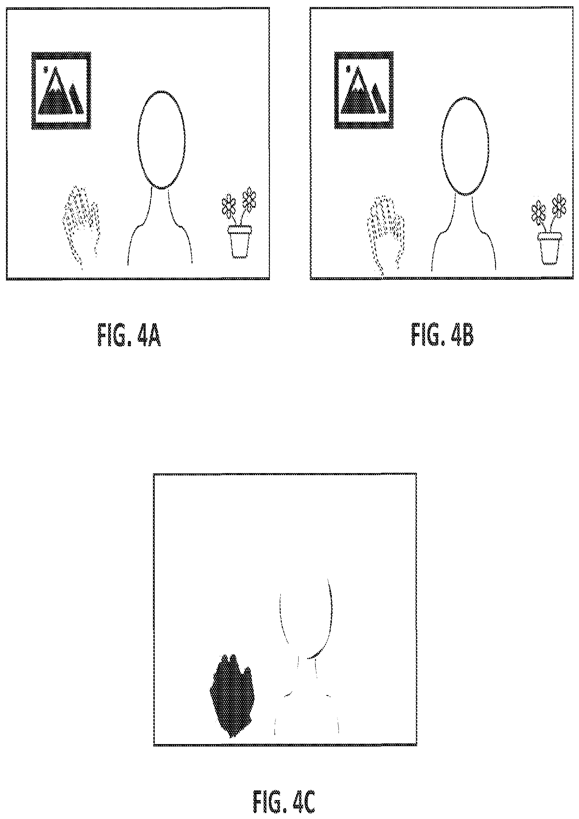

FIGS. 4A and 4B are an example of two consecutive frames including a moving object as well as stationary objects, in accordance with various embodiments. In particular, as shown in FIGS. 4A and 4B, there is a person waving their hand, and there are background objects including a picture on the wall and a potted plant. In general, a TNR averages several consecutive frames to average out jitter. However, if there is a moving object, then when frames are averaged, the average will result in ghosting instead of a nice crisp object. Thus, areas of an image with a moving object should not be averaged by the TNR. The TNR determines which regions of an image can be averaged, and which regions cannot be averaged.

FIG. 4C is an example of a TNR blend map (also known as an alpha map) produced by a TNR, in accordance with various embodiments. In the TNR blend map of FIG. 4C, the black spots and lines are areas where the α has a low value (and thus areas where consecutive frames should not be averaged), while the white space is areas where α has a high value (areas that can be averaged). The α has a high value in static regions of the frame. The α has a low value where there are moving objects. Thus, the area where the person's hand is waving has a low alpha value (α ≅ 0), as indicated by the large black spot in FIG. 4C, and some dark areas around the person (for instance, where the person may have moved their head slightly). The dark area indicate movement between the frames in FIGS. 4A and 4B. Thus, blending is avoided in areas where there is movement or where the frames are dissimilar (where α ≅ 0).

With reference back to FIG. 3, an uncalibrated or badly calibrated TNR would fail to discriminate between similar and dissimilar regions in the frames of the current input and the previous output. Similarly, an uncalibrated or badly calibrated TNR would fail to discriminate between similar and dissimilar regions in the frames of FIGS. 4A and 4B. When a moving object is blended with the background, a ghost artifact appears in the output frame (i.e., in the output video). In particular, a ghost artifact appears when pixels of the moving foreground object are blended with the background pixels, making the moving object appear transparent. When the current input is blended with the previous output, the ghost artifact trails behind the moving object.

### Example Time-Reversed TNR

Training and/or calibrating a TNR can occur offline (e.g., before an execution of the TNR, which may be for training or inference, is started), thus removing any causality limitations. A time-reversed TNR can be defined, in which the same TNR framework described above with respect to FIGS. 2 and 3 is applied but with the order of the frames reversed. A badly calibrated TNR will create ghosts with the order of the frames reversed, but the ghosts will appear different since the time-reversed trajectory of the motion is different. In particular, with time-reversed frames, the trajectory of the motion is also reversed.

A well calibrated TNR may not exhibit any ghost artifacts, and the output of the time-forward (causal) TNR will be identical to the output of the time-reversed TNR. Thus, a TNR can be calibrated by minimizing the difference between the time-forward output and the time-reversed output. In particular the time-forward output can be defined as follows: ${O}_{n}^{causal} = {TNR}^{causal} \left({I}_{n}\right) = TNR \left({I}_{n},{I}_{n - 1},{I}_{n - 2},…\right)$ where ${O}_{n}^{causal}$ is the output of the causal (time-forward) TNR at the nth frame, derived using past input frames *Iₙ, I*_{*n-*1}, *I*_{*n-*2}, ...

Similarly, the time-reversed output, using future input frames in reverse order, can be defined as follows: ${O}_{n}^{reversed} = {TNR}^{reversed} \left({I}_{n}\right) = TNR \left({I}_{n},{I}_{n + 1},{I}_{n + 2},…\right)$ where ${O}_{n}^{reversed}$ is the output of the time-reverse TNR at the nth frame.

Given a loss function L between two video frames, training and/or calibrating the TNR by searching for the minimum value of $L \left({O}_{n}^{causal}, {O}_{n}^{reversed}\right)$ decreases ghost artifacts.

However, the TNR cannot be trained and/or calibrated using a criterion of minimizing the value of $L \left({O}_{n}^{causal}, {O}_{n}^{reversed}\right)$, since it has a trivial minimum when the TNR has no effect. That is, when the blend-map is generated using α= 0, the TNR output *Oₙ* is identical to the input *Iₙ*, and $L \left({O}_{n}^{causal}, {O}_{n}^{reversed}\right) = L \left({I}_{n}, {O}_{n}\right) , = 0$

To define a usable criterion, the target frame of the time-reversed TNR can be incremented by one, and the time-reversal similarity (TRS) criterion for finding the optimal parameters *p* for the TNR algorithm can be redefined as shown below. Thus: ${O}_{n + 1}^{reversed} = {TNR}^{reversed} \left({I}_{n + 1}\right) = TNR \left({I}_{n + 1},{I}_{n + 2},{I}_{n + 3},…\right)$
and ${p}^{TRS} = {argmin}_{p} L \left({O}_{n}^{causal}, {O}_{n + 1}^{reversed}\right)$

Thus, the TNR is now minimizing a difference between different frames. The time-reversal ensures low ghosting as described above. The shifted target frames ensure that the TNR is tuned to make adjacent frames more similar where possible thereby reducing noise (and encouraging a high α where blending is possible).

In various examples, a DL-based TNR can be trained using the TRS criterion. By decreasing the number of parameters and the number of operations-per-pixel, the DL-based TNR can operate in real time.

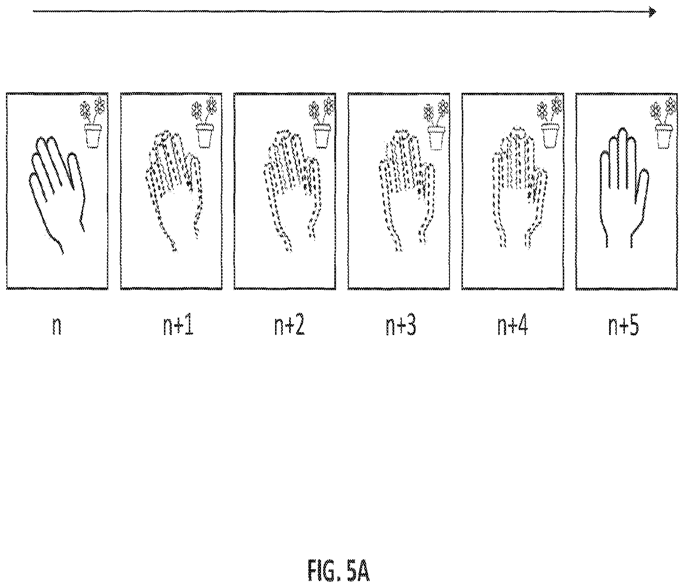

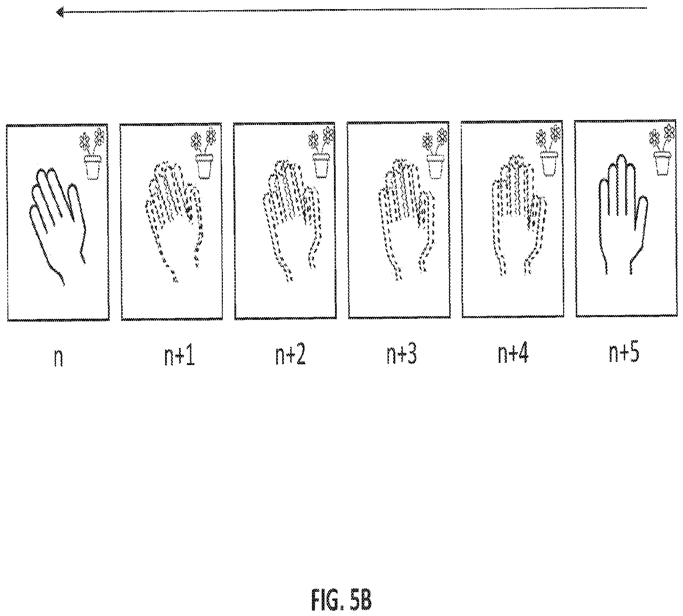

FIGS. 5A and 5B illustrate the different ghosting patterns in time-forward versus time-reversed TNR processing, in accordance with various embodiments. In particular, in FIG. 5A, the ghosting effect trails to the left side of the hand as the hand moves from its diagonal position at time *n* to its vertical position at time *n+5.* In contrast, in FIG. 5B, the ghosting effect trails to the right side of the hand as the hand moves from the vertical position at time n+5 to the diagonal position at time *n.* In a perfectly calibrated TNR, there would be no ghosting. In various examples, a TNR can be calibrated by minimizing the differences in the ghosting patterns between FIGS. 5A and 5B.

### Example Online Calibration of a TNR

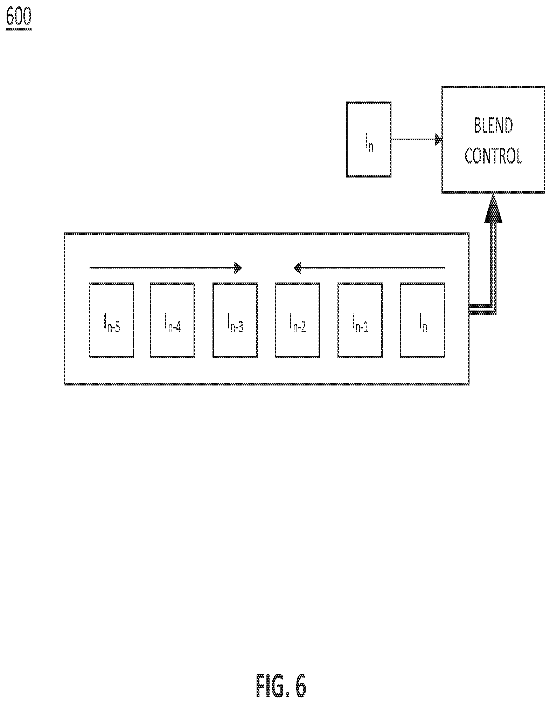

FIG. 6 illustrates a schematic of an example TNR 600 that can be calibrated online, in accordance with various embodiments. Online calibration may be calibration performed during an execution of the TNR 600. The execution of the TNR 600 may include executions of operations in the TNR 600 and may be for training the TNR 600 or for inference. As shown in FIG. 6, online calibration can be performed using the TRS calibration criterion described above by allowing a delay between the frame currently processed and the center of the time-reversal. In particular, while the TNR is processing frame *n*, the calibration can operate using the 2*m* frames centered on frame *n-m.* Thus, as illustrated in FIG. 6, m=3, the calibration can operate on six frames with frames *Iₙ₋₅, Iₙ₋₄ and Iₙ₋₃* used for the time-forward values and frames *I*_{*n-*2}, *Iₙ₋₁ and Iₙ* used for the time-reversed values. Thus, the TNR 600 can perform calibration in real-time using past and present frames, allowing for TNR live calibration.

Online calibration provides more robust TNR, since the calibration can track changes in the various statistics of the input signal (e.g., changes in lighting conditions). Since the statistical properties of a video stream normally change slowly over time, the delay of m frames has negligible effect on the quality of the online calibration. In some examples, the online calibration process for the TNR described herein can be used to find optimal parameters using videos recorded "in the wild" - videos with no labeling or other human labor involved. For example, a video of a moving car or a video of a person waving, can be used to calibrate a TNR parameters.

In various implementations, there are many potential variations of the TRS criterion that can be used for training and/or calibrating TNRs by minimizing the difference between the outputs produced by different combinations of input frames.

In one example, the odd frames can be compared to the even frames. In particular, TNR(*Iₙ*, *I*_{*n-*2}, *Iₙ₋₄,* ...) versus TNR (*Iₙ₋₁, Iₙ₋₃, Iₙ₋₅,* ... ). In another example, the shift between causal and time-reversed can be interlaced TNR (*Iₙ₊₁*, *Iₙ₋₁, I*_{*n-*2}, ... ) versus TNR (*Iₙ, Iₙ₊₂, Iₙ₊₃,* ... ). In general, according to various examples, any combination of input frames can be used for calibration as long as the frames are non-overlapping and the scene in the frames is relatively similar.

Additionally, in some implementations, the different combinations of input frames to a TNR can include one or more new input frames and one or more previous output frames, where the previous output frames were previously output from the TNR.

### Example Method of TNR Calibration

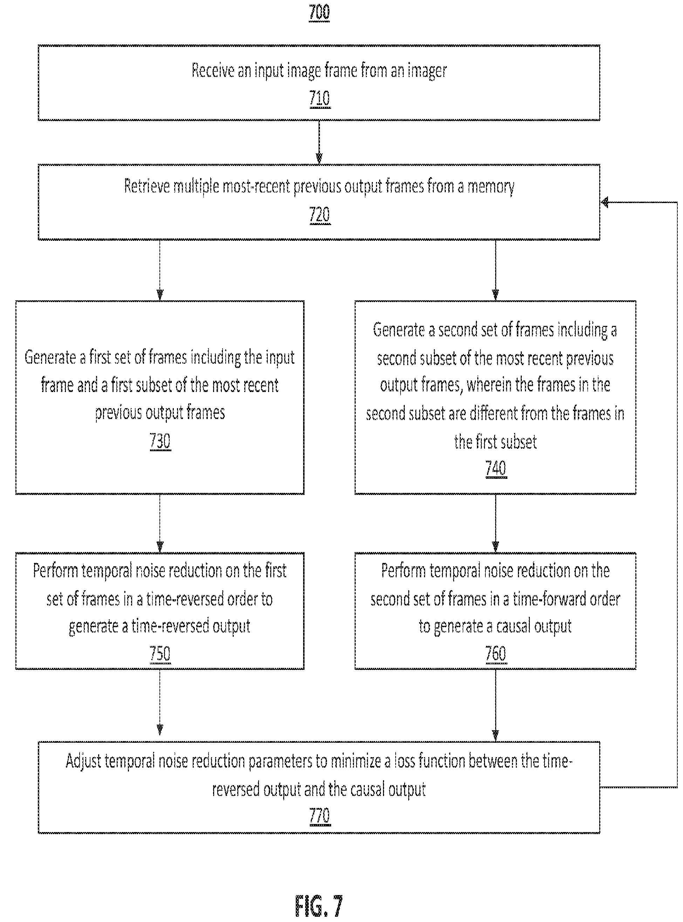

FIG. 7 is a flowchart showing a method 700 of TNR calibration, in accordance with various embodiments. The method 700 may be performed by the deep learning system 100 in FIG. 1. Although the method 700 is described with reference to the flowchart illustrated in FIG. 7, many other methods for TNR calibration may alternatively be used. For example, the order of execution of the steps in FIG. 7 may be changed. As another example, some of the steps may be changed, eliminated, or combined.

At step 710, an input image frame is received from an imager. In various examples, the input image frame is received at a temporal noise reducer such as the temporal noise reducer 120, 204a, 204b, or 304. In other examples, the input image frame can be received at the training module 130 or the inference module 150 of FIG. 1. The imager can be a camera, such as a video camera. The input image frame can be a still image from the video camera feed. The input image frame can include a matrix of pixels, each pixel having a color, lightness, and/or other parameter.

At step 720, multiple previous TNR output frames are retrieved from a memory. In various examples, the previous TNR output frames are the most-recent TNR output frames. At steps 730 and 740, the most-recent TNR output frames are divided into two subsets. At step 730, the most recent input frame is added to the first subset. The images be divided into subsets as described above with respect to FIG. 6.

At step 750, temporal noise reduction is performed on the first set of frames in a time-reversed order to generate a time-reversed output. At step 760, temporal noise reduction is performed on the second set of frames in a time-forward order to generate a causal output. In various examples, temporal noise reduction can be performed on the first set of frames in a time-forward order and on the second set of frames in the time-reversed order. In general, one subset of frames will be TNR processed in time-forward order and one subset of frames will be TNR processed in time-reversed order.

At step 770, temporal noise reduction parameters are adjusted to minimize a loss function between the time-reversed output and the causal output from steps 750 and 760, as described above. In various examples, the method 700 returns to step 720 and repeats to further adjust the TNR parameters. In some examples, the method 700 returns to step 710 and repeats with a new input image frame.

### Example Computing Device

FIG. 8 is a block diagram of an example computing device 800, in accordance with various embodiments. In some embodiments, the computing device 800 may be used for at least part of the deep learning system 100 in FIG. 1. A number of components are illustrated in FIG. 8 as included in the computing device 800, but any one or more of these components may be omitted or duplicated, as suitable for the application. In some embodiments, some or all of the components included in the computing device 800 may be attached to one or more motherboards. In some embodiments, some or all of these components are fabricated onto a single system on a chip (SoC) die. Additionally, in various embodiments, the computing device 800 may not include one or more of the components illustrated in FIG. 8, but the computing device 800 may include interface circuitry for coupling to the one or more components. For example, the computing device 800 may not include a display device 806, but may include display device interface circuitry (e.g., a connector and driver circuitry) to which a display device 806 may be coupled. In another set of examples, the computing device 800 may not include a video input device 818 or a video output device 808, but may include video input or output device interface circuitry (e.g., connectors and supporting circuitry) to which a video input device 818 or video output device 808 may be coupled.

The computing device 800 may include a processing device 802 (e.g., one or more processing devices). The processing device 802 processes electronic data from registers and/or memory to transform that electronic data into other electronic data that may be stored in registers and/or memory. The computing device 800 may include a memory 804, which may itself include one or more memory devices such as volatile memory (e.g., DRAM), nonvolatile memory (e.g., read-only memory (ROM)), high bandwidth memory (HBM), flash memory, solid state memory, and/or a hard drive. In some embodiments, the memory 804 may include memory that shares a die with the processing device 802. In some embodiments, the memory 804 includes one or more non-transitory computer-readable media storing instructions executable for occupancy mapping or collision detection, e.g., the method 900 described above in conjunction with FIG. 9 or some operations performed by the DNN system 100 in FIG. 1. The instructions stored in the one or more non-transitory computer-readable media may be executed by the processing device 802.

In some embodiments, the computing device 800 may include a communication chip 812 (e.g., one or more communication chips). For example, the communication chip 812 may be configured for managing wireless communications for the transfer of data to and from the computing device 800. The term "wireless" and its derivatives may be used to describe circuits, devices, systems, methods, techniques, communications channels, etc., that may communicate data using modulated electromagnetic radiation through a nonsolid medium. The term does not imply that the associated devices do not contain any wires, although in some embodiments they might not.

The communication chip 812 may implement any of a number of wireless standards or protocols, including but not limited to Institute for Electrical and Electronic Engineers (IEEE) standards including Wi-Fi (IEEE 802.10 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication chip 812 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication chip 812 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication chip 812 may operate in accordance with code-division multiple access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication chip 812 may operate in accordance with other wireless protocols in other embodiments. The computing device 800 may include an antenna 822 to facilitate wireless communications and/or to receive other wireless communications (such as AM or FM radio transmissions).

In some embodiments, the communication chip 812 may manage wired communications, such as electrical, optical, or any other suitable communication protocols (e.g., the Ethernet). As noted above, the communication chip 812 may include multiple communication chips. For instance, a first communication chip 812 may be dedicated to shorter-range wireless communications such as Wi-Fi or Bluetooth, and a second communication chip 812 may be dedicated to longer-range wireless communications such as global positioning system (GPS), EDGE, GPRS, CDMA, WiMAX, LTE, EV-DO, or others. In some embodiments, a first communication chip 812 may be dedicated to wireless communications, and a second communication chip 812 may be dedicated to wired communications.

The computing device 800 may include battery/power circuitry 814. The battery/power circuitry 814 may include one or more energy storage devices (e.g., batteries or capacitors) and/or circuitry for coupling components of the computing device 800 to an energy source separate from the computing device 800 (e.g., AC line power).

The computing device 800 may include a display device 806 (or corresponding interface circuitry, as discussed above). The display device 806 may include any visual indicators, such as a heads-up display, a computer monitor, a projector, a touchscreen display, a liquid crystal display (LCD), a light-emitting diode display, or a flat panel display, for example.

The computing device 800 may include a video output device 808 (or corresponding interface circuitry, as discussed above). The video output device 808 may include any device that generates an audible indicator, such as speakers, headsets, or earbuds, for example.

The computing device 800 may include a video input device 818 (or corresponding interface circuitry, as discussed above). The video input device 818 may include any device that generates a signal representative of a sound, such as microphones, microphone arrays, or digital instruments (e.g., instruments having a musical instrument digital interface (MIDI) output).

The computing device 800 may include a GPS device 816 (or corresponding interface circuitry, as discussed above). The GPS device 816 may be in communication with a satellitebased system and may receive a location of the computing device 800, as known in the art.

The computing device 800 may include another output device 810 (or corresponding interface circuitry, as discussed above). Examples of the other output device 810 may include a video codec, a video codec, a printer, a wired or wireless transmitter for providing information to other devices, or an additional storage device.

The computing device 800 may include another input device 820 (or corresponding interface circuitry, as discussed above). Examples of the other input device 820 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing device 800 may have any desired form factor, such as a handheld or mobile computer system (e.g., a cell phone, a smart phone, a mobile internet device, a music player, a tablet computer, a laptop computer, a netbook computer, an ultrabook computer, a personal digital assistant (PDA), an ultramobile personal computer, etc.), a desktop computer system, a server or other networked computing component, a printer, a scanner, a monitor, a set-top box, an entertainment control unit, a vehicle control unit, a digital camera, a digital video recorder, or a wearable computer system. In some embodiments, the computing device 800 may be any other electronic device that processes data.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

## Claims

1. A computer-implemented method, comprising:
processing video data using a deep learning model for temporal noise reduction;
receiving (710) an input frame from an imager;
retrieving (720) a plurality of previous output frames from a memory;
generating (730) a first set of frames including the input frame and a first subset of the plurality of previous output frames;
generating (740) a second set of frames including a second subset of the plurality of previous output frames, wherein the second subset of previous output frames is different from the first subset;
performing (750) a first instance of the deep learning temporal noise reduction model on the first set of frames in a time-reversed order to generate a time-reversed output corresponding to the past and present frames, wherein the time-reversed order is newer frame to older frame order;
performing (760) a second instance of the deep learning temporal noise reduction model on the second set of frames in a time-forward order to generate causal output corresponding to the future frames, wherein the time-forward order is older frame to newer frame order; and
adjusting (770) temporal noise reduction parameters of the deep learning temporal noise reduction model to minimize a loss function between the time-reversed output and the causal output to reduce temporal noise in a video stream.

2. The computer-implemented method of according to claim 1, wherein receiving the input frame from the imager includes receiving real-world unlabeled video image frames.

3. The computer-implemented method according to claims 1-2, wherein performing a first instance of the deep learning temporal noise reduction model on the first set of frames includes determining a blend factor value for each of a plurality of regions of the first set of frames.

4. The computer-implemented method according to claim 3, wherein determining the blend factor value includes determining a high blend factor value for respective regions in the plurality of regions for which the respective region in each frame in the first set of frames is similar.

5. The computer-implemented method according to claims 3-4, wherein determining the blend factor value includes determining a low blend factor value for respective regions in the plurality of regions for which the respective region in each frame in the first set of frames is different.

6. The computer-implemented method according to claim 1-5, wherein performing a first instance of the deep learning temporal noise reduction model on the first set of frames include reducing noise in static regions of the first set of frames, and wherein performing a second instance of the deep learning temporal noise reduction model on the second set of frames includes reducing noise in static regions of the second set of frames.

7. The computer-implemented method according to claims 1-6, wherein performing a first instance of the deep learning temporal noise reduction model on the first set of frames includes performing temporal noise reduction using a first set of temporal noise reduction parameters, wherein performing a second instance of the deep learning temporal noise reduction model on the second set of frames includes performing temporal noise reduction using the first set of temporal noise reduction parameters, and wherein adjusting the temporal noise reduction parameters includes generating a second set of temporal noise reduction parameters, and further comprising:
performing the deep learning temporal noise reduction model on the first set of frames in the time-reversed order using the second set of temporal noise reduction parameters; and
performing the dep learning temporal noise reduction model on the second set of frames in the time-forward order using the second set of temporal noise reduction parameters.

8. The computer-implemented method according to claims 1-7, wherein adjusting the temporal noise reduction parameters includes training a deep learning temporal noise reduction model by adjusting one or more parameters in the temporal noise reduction model to minimize a loss function between the time-reversed output and the causal output.

9. One or more non-transitory computer-readable media storing instructions executable to perform operations, the operations comprising:
processing video data using a deep learning model for temporal noise reduction;
receiving an input frame from an imager;
retrieving a plurality of previous output frames from a memory;
generating a first set of frames including the input frame and a first subset of the plurality of previous output frames;
generating a second set of frames including a second subset of the plurality of previous output frames, wherein the second subset of previous output frames is different from the first subset;
performing a first instance of the deep learning temporal noise reduction model on the first set of frames in a time reversed order to generate a time-reversed output corresponding to the past and present frames, wherein the time-reversed order is newer frame to older frame order;
performing a second instance of the deep learning temporal noise reduction model on the second set of frames in a time forward order to generate causal output corresponding to the future frames, wherein the time-forward order is older frame to newer frame order; and
adjusting temporal noise reduction parameters of the deep learning temporal noise reduction model to minimize a loss function between the time-reversed output and the causal output thereby reducing temporal noise in a video stream.

10. The one or more non-transitory computer-readable media according to claim 9, wherein performing a first instance of the deep learning temporal noise reduction model on the first set of frames includes determining a blend factor value for each of a plurality of regions of the first set of frames.

11. An apparatus, comprising:
a computer processor for executing computer program instructions; and
a non-transitory computer-readable memory storing computer program instructions executable by the computer processor to perform operations comprising:
processing video data using a deep learning model for temporal noise reduction;
receiving an input frame from an imager;
retrieving a plurality of previous output frames from a memory;
generating a first set of frames including the input frame and a first subset of the plurality of previous output frames;
generating a second set of frames including a second subset of the plurality of previous output frames, wherein the second subset of previous output frames is different from the first subset;
performing a first instance of the deep learning temporal noise reduction model on the first set of frames in a time reversed order to generate a time-reversed output corresponding to the past and present frames, wherein the time-reversed order is newer frame to older frame order;
performing a second instance of the deep learning temporal noise reduction model on the second set of frames in a time forward order to generate causal output corresponding to the future frames, wherein the time-forward order is older frame to newer frame order; and
adjusting temporal noise reduction parameters of the deep learning temporal noise reduction model to minimize a loss function between the time-reversed output and the causal output.

12. The apparatus according to claim 11, wherein the operations further comprise receiving the input frame from the imager includes receiving real-world unlabeled video image frames.

13. The apparatus according to claim 11-12, wherein the operations further comprise performing a first instance of the deep learning temporal noise reduction model on the first set of frames includes determining a blend factor value for each of a plurality of regions of the first set of frames.

14. The apparatus according to claim 11-13, wherein the operations further comprise determining a high blend factor value for respective regions in the plurality of regions for which the respective region in each frame in the first set of frames is similar.

15. The apparatus according to claim 11-14, wherein the operations further comprise determining a low blend factor value for respective regions in the plurality of regions for which the respective region in each frame in the first set of frames is different.

## Patentansprüche

1. Computerimplementiertes Verfahren, umfassend:
Verarbeiten von Videodaten unter Verwendung eines Deep-Learning-Modells zur Verminderung zeitlichen Rauschens;
Empfangen (710) eines Eingabeframes von einem Bildgerät; Abrufen (720) einer Mehrzahl von vorherigen Ausgabeframes aus einem Speicher;
Erzeugen (730) eines ersten Satzes von Frames, der den Eingabeframe und eine erste Teilmenge der Mehrzahl von vorherigen Ausgaberahmen aufweist;
Erzeugen (740) eines zweiten Satzes von Frames, der eine zweite Teilmenge der Mehrzahl von vorherigen Ausgabeframes aufweist, wobei sich die zweite Teilmenge vorheriger Ausgabeframes von der ersten Teilmenge unterscheidet;
Ausführen (750) einer ersten Instanz des Deep-Learning-Modells zur Verminderung zeitlichen Rauschens an dem ersten Satz von Frames in einer zeitlich rückwärts geordneten Reihenfolge, um eine zeitlich rückwärts geordnete Ausgabe zu erzeugen, die dem vergangenen und dem gegenwärtigen Frame entspricht, wobei die zeitlich rückwärts geordnete Reihenfolge eine Reihenfolge von neuerem Frame zu älterem Frame ist;
Ausführen (760) einer zweiten Instanz des Deep-Learning-Modells zur Verminderung zeitlichen Rauschens an dem zweiten Satz von Frames in einer zeitlich vorwärts geordneten Reihenfolge, um eine kausale Ausgabe zu erzeugen, die den zukünftigen Frames entspricht, wobei die zeitlich vorwärts geordnete Reihenfolge eine Reihenfolge von älterem Frame zu neuerem Frame ist; und
Anpassen (770) von Parametern zur Verminderung zeitlichen Rauschens des Deep-Learning-Modells zur Verminderung zeitlichen Rauschens, um eine Verlustfunktion zwischen der zeitlich rückwärts geordneten Ausgabe und der kausalen Ausgabe zu minimieren, um zeitliches Rauschen in einem Videostrom zu vermindern.

2. Computerimplementiertes Verfahren nach Anspruch 1, wobei das Empfangen des Eingabeframes von dem Bildgerät Empfangen von realen nicht gekennzeichneten Videobildframes aufweist.

3. Computerimplementiertes Verfahren nach den Ansprüchen 1-2, wobei das Ausführen einer ersten Instanz des Deep-Learning-Modells zur Verminderung zeitlichen Rauschens an dem ersten Satz von Frames Bestimmen eines Mischfaktorwerts für jede einer Mehrzahl von Regionen des ersten Satzes von Frames aufweist.

4. Computerimplementiertes Verfahren nach Anspruch 3, wobei das Bestimmen des Mischfaktorwerts Bestimmen eines hohen Mischfaktorwerts für jeweilige Regionen in der Mehrzahl von Regionen aufweist, für die die jeweilige Region in jedem Frame in dem ersten Satz von Frames ähnlich ist.

5. Computerimplementiertes Verfahren nach Anspruch 3-4, wobei das Bestimmen des Mischfaktorwerts Bestimmen eines niedrigen Mischfaktorwerts für jeweilige Regionen in der Mehrzahl von Regionen aufweist, für die sich die jeweilige Region in jedem Frame in dem ersten Satz von Frames unterscheidet.

6. Computerimplementiertes Verfahren nach Anspruch 1-5, wobei das Ausführen einer ersten Instanz des Deep-Learning-Modells zur Verminderung zeitlichen Rauschens an dem ersten Satz von Frames Vermindern von Rauschen in statischen Regionen des ersten Satzes von Frames aufweist und wobei das Ausführen einer zweiten Instanz des Deep-Learning-Modells zur Verminderung zeitlichen Rauschen an dem zweiten Satz von Frames Vermindern von Rauschen in statischen Regionen des zweiten Satzes von Frames beinhaltet.

7. Computerimplementiertes Verfahren nach den Ansprüchen 1-6, wobei das Ausführen einer ersten Instanz des Deep-Learning-Modells zur Verminderung zeitlichen Rauschens an dem ersten Satz von Frames Durchführen einer Verminderung zeitlichen Rauschens unter Verwendung eines ersten Satzes von Parametern zur Verminderung zeitlichen Rauschens aufweist, wobei das Ausführen einer zweiten Instanz des Deep-Learning-Modells zur Verminderung zeitlichen Rauschens an dem zweiten Satz von Frames Durchführen einer Verminderung zeitlichen Rauschens unter Verwendung des ersten Satzes von Parametern zur Verminderung zeitlichen Rauschens aufweist, und wobei das Anpassen der Parameter zur Verminderung zeitlichen Rauschens Erzeugen eines zweiten Satzes von Parametern zur Verminderung zeitlichen Rauschens aufweist, und ferner umfassend:
Ausführen des Deep-Learning-Modells zur Verminderung zeitlichen Rauschens an dem ersten Satz von Frames in der zeitlich rückwärts geordneten Reihenfolge unter Verwendung des zweiten Satzes von Parametern zur Verminderung zeitlichen Rauschens; und
Ausführen des Deep-Learning-Modells zur Verminderung zeitlichen Rauschens an dem zweiten Satz von Frames in der zeitlich vorwärts geordneten Reihenfolge unter Verwendung des zweiten Satzes von Parametern zur Verminderung zeitlichen Rauschens.

8. Computerimplementiertes Verfahren nach den Ansprüchen 1-7, wobei das Anpassen der Parameter zur Verminderung zeitlichen Rauschens Trainieren eines Deep-Learning-Modells zur Verminderung zeitlichen Rauschens durch Anpassen eines oder mehrerer Parameter in dem Modell zur Verminderung zeitlichen Rauschens aufweist, um eine Verlustfunktion zwischen der zeitlich rückwärts geordneten Ausgabe und der kausalen Ausgabe zu minimieren.

9. Ein oder mehrere nichtflüchtige computerlesbare Medien, die Anweisungen speichern, die ausgeführt werden können, um Operationen durchzuführen, wobei die Operationen Folgendes umfassen:
Verarbeiten von Videodaten unter Verwendung eines Deep-Learning-Modells zur Verminderung zeitlichen Rauschens;
Empfangen eines Eingabeframes von einem Bildgerät;
Abrufen einer Mehrzahl von vorherigen Ausgabeframes aus einem Speicher;
Erzeugen eines ersten Satzes von Frames, der den Eingabeframe und eine erste Teilmenge der Mehrzahl von vorherigen Ausgabeframes aufweist;
Erzeugen eines zweiten Satzes von Frames, der eine zweite Teilmenge der Mehrzahl von vorherigen Ausgabeframes aufweist, wobei sich die zweite Teilmenge vorheriger Ausgabeframes von der ersten Teilmenge unterscheidet;
Ausführen einer ersten Instanz des Deep-Learning-Modells zur Verminderung zeitlichen Rauschens an dem ersten Satz von Frames in einer zeitlich rückwärts geordneten Reihenfolge, um eine zeitlich rückwärts geordnete Ausgabe zu erzeugen, die dem vergangenen und dem gegenwärtigen Frame entspricht, wobei die zeitlich rückwärts geordnete Reihenfolge eine Reihenfolge von neuerem Frame zu älterem Frame ist;
Ausführen einer zweiten Instanz des Deep-Learning-Modells zur Verminderung zeitlichen Rauschens an dem zweiten Satz von Frames in einer zeitlich vorwärts geordneten Reihenfolge, um eine kausale Ausgabe zu erzeugen, die den zukünftigen Frames entspricht, wobei die zeitlich vorwärts geordnete Reihenfolge eine Reihenfolge von älterem Frame zu neuerem Frame ist; und
Anpassen von Parametern zur Verminderung zeitlichen Rauschens des Deep-Learning-Modells zur Verminderung zeitlichen Rauschens, um eine Verlustfunktion zwischen der zeitlich rückwärts geordneten Ausgabe und der kausalen Ausgabe zu minimieren, um zeitliches Rauschen in einem Videostrom zu vermindern.

10. Ein oder mehrere nichtflüchtiges computerlesbare Medien nach Anspruch 9, wobei das Ausführen einer ersten Instanz des Deep-Learning-Modells zur Verminderung zeitlichen Rauschens an dem ersten Satz von Frames Bestimmen eines Mischfaktorwerts für jede einer Mehrzahl von Regionen des ersten Satzes von Frames aufweist.

11. Einrichtung, umfassend:
einen Computerprozessor zum Ausführen von Computerprogrammanweisungen; und
einen nichtflüchtigen computerlesbaren Speicher, der Computerprogrammanweisungen speichert, die von dem Computerprozessor ausgeführt werden können, um Operationen durchzuführen, die Folgendes umfassen:
Verarbeiten von Videodaten unter Verwendung eines Deep-Learning-Modells zur Verminderung zeitlichen Rauschens;
Empfangen eines Eingabeframes von einem Bildgerät;
Abrufen einer Mehrzahl von vorherigen Ausgabeframes aus einem Speicher;
Erzeugen eines ersten Satzes von Frames, der den Eingabeframe und eine erste Teilmenge der Mehrzahl von vorherigen Ausgabeframes aufweist;
Erzeugen eines zweiten Satzes von Frames, der eine zweite Teilmenge der Mehrzahl von vorherigen Ausgabeframes aufweist, wobei sich die zweite Teilmenge vorheriger Ausgabeframes von der ersten Teilmenge unterscheidet;
Ausführen einer ersten Instanz des Deep-Learning-Modells zur Verminderung zeitlichen Rauschens an dem ersten Satz von Frames in einer zeitlich rückwärts geordneten Reihenfolge, um eine zeitlich rückwärts geordnete Ausgabe zu erzeugen, die dem vergangenen und dem gegenwärtigen Frame entspricht, wobei die zeitlich rückwärts geordnete Reihenfolge eine Reihenfolge von neuerem Frame zu älterem Frame ist;
Ausführen einer zweiten Instanz des Deep-Learning-Modells zur Verminderung zeitlichen Rauschens an dem zweiten Satz von Frames in einer zeitlich vorwärts geordneten Reihenfolge, um eine kausale Ausgabe zu erzeugen, die den zukünftigen Frames entspricht, wobei die zeitlich vorwärts geordnete Reihenfolge eine Reihenfolge von älterem Frame zu neuerem Frame ist; und
Anpassen von Parametern zur Verminderung zeitlichen Rauschens des Deep-Learning-Modells zur Verminderung zeitlichen Rauschens, um eine Verlustfunktion zwischen der zeitlich rückwärts geordneten Ausgabe und der kausalen Ausgabe zu minimieren.

12. Einrichtung nach Anspruch 11, wobei die Operationen, die Empfangen des Eingabeframes von dem Bildgerät umfassen, ferner Empfangen von realen nicht gekennzeichneten Videobildframes aufweisen.

13. Einrichtung nach Anspruch 11-12, wobei die Operationen, die das Ausführen einer ersten Instanz des Deep-Learning-Modells zur Verminderung zeitlichen Rauschens an dem ersten Satz von Frames umfassen, ferner Bestimmen eines Mischfaktorwerts für jede einer Mehrzahl von Regionen des ersten Satzes von Frames aufweisen.

14. Einrichtung nach Anspruch 11-13, wobei die Operationen ferner Bestimmen eines hohen Mischfaktorwerts für jeweilige Regionen in der Mehrzahl von Regionen umfassen, für die die jeweilige Region in jedem Frame in dem ersten Satz von Frames ähnlich ist.

15. Einrichtung nach Anspruch 11-14, wobei die Operationen ferner Bestimmen eines niedrigen Mischfaktorwerts für jeweilige Regionen in der Mehrzahl von Regionen umfassen, für die sich die jeweilige Region in jedem Frame in dem ersten Satz von Frames unterscheidet.

## Revendications

1. Procédé mis en œuvre par ordinateur, comprenant :
le traitement de données vidéo en utilisant un modèle d'apprentissage profond pour la réduction du bruit temporel ;
la réception (710) d'une trame d'entrée en provenance d'un imageur ;
la récupération (720) d'une pluralité de trames de sortie précédentes à partir d'une mémoire ;
la génération (730) d'un premier ensemble de trames comprenant la trame d'entrée et un premier sous-ensemble de la pluralité de trames de sortie précédentes ;
la génération (740) d'un second ensemble de trames comprenant un second sous-ensemble de la pluralité de trames de sortie précédentes, le second sous-ensemble de trames de sortie précédentes étant différent du premier sous-ensemble ;
l'exécution (750) d'une première instance du modèle de réduction du bruit temporel d'apprentissage profond sur le premier ensemble de trames dans un ordre inversé dans le temps pour générer une sortie inversée dans le temps correspondant aux trames passées et présentes, l'ordre inversé dans le temps étant un ordre de trame plus récent à un ordre de trame plus ancien ;
l'exécution (760) d'une seconde instance du modèle de réduction du bruit temporel d'apprentissage profond sur le second ensemble de trames dans un ordre chronologique pour générer une sortie causale correspondant aux trames futures, l'ordre chronologique étant un ordre de trame plus ancien à un ordre de trame plus récent ; et
l'ajustement (770) des paramètres de réduction du bruit temporel du modèle de réduction du bruit temporel d'apprentissage profond afin de minimiser une fonction de perte entre la sortie inversée dans le temps et la sortie causale pour réduire le bruit temporel dans un flux vidéo.

2. Procédé mis en œuvre par ordinateur selon la revendication 1, dans lequel la réception de la trame d'entrée en provenance de l'imageur comprend la réception de trames d'image vidéo non étiquetées du monde réel.

3. Procédé mis en œuvre par ordinateur selon les revendications 1 et 2, dans lequel l'exécution d'une première instance du modèle de réduction du bruit temporel d'apprentissage profond sur le premier ensemble de trames comprend la détermination d'une valeur de facteur de mélange pour chacune d'une pluralité de régions du premier ensemble de trames.

4. Procédé mis en œuvre par ordinateur selon la revendication 3, dans lequel la détermination de la valeur de facteur de mélange comprend la détermination d'une valeur de facteur de mélange élevée pour des régions respectives dans la pluralité de régions pour lesquelles la région respective dans chaque trame dans le premier ensemble de trames est similaire.

5. Procédé mis en œuvre par ordinateur selon les revendications 3 à 4, dans lequel la détermination de la valeur de facteur de mélange comprend la détermination d'une valeur de facteur de mélange faible pour des régions respectives dans la pluralité de régions pour lesquelles la région respective dans chaque trame dans le premier ensemble de trames est différente.

6. Procédé mis en œuvre par ordinateur selon les revendications 1 à 5, dans lequel l'exécution d'une première instance du modèle de réduction du bruit temporel d'apprentissage profond sur le premier ensemble de trames comprend la réduction du bruit dans des régions statiques du premier ensemble de trames, et l'exécution d'une seconde instance du modèle de réduction du bruit temporel d'apprentissage profond sur le second ensemble de trames comprend la réduction du bruit dans des régions statiques du second ensemble de trames.

7. Procédé mis en œuvre par ordinateur selon les revendications 1 à 6, dans lequel l'exécution d'une première instance du modèle de réduction du bruit temporel d'apprentissage profond sur le premier ensemble de trames comprend l'exécution d'une réduction du bruit temporel en utilisant un premier ensemble de paramètres de réduction du bruit temporel, dans lequel l'exécution d'une seconde instance du modèle de réduction du bruit temporel d'apprentissage profond sur le second ensemble de trames comprend l'exécution d'une réduction du bruit temporel en utilisant le premier ensemble de paramètres de réduction du bruit temporel, et dans lequel l'ajustement des paramètres de réduction du bruit temporel comprend la génération d'un second ensemble de paramètres de réduction du bruit temporel, et comprenant en outre :
l'exécution du modèle de réduction du bruit temporel d'apprentissage profond sur le premier ensemble de trames dans l'ordre inversé dans le temps en utilisant le second ensemble de paramètres de réduction du bruit temporel ; et
l'exécution du modèle de réduction du bruit temporel d'apprentissage profond sur le second ensemble de trames dans l'ordre chronologique en utilisant le second ensemble de paramètres de réduction du bruit temporel.

8. Procédé mis en œuvre par ordinateur selon les revendications 1 à 7, dans lequel l'ajustement des paramètres de réduction du bruit temporel comprend l'apprentissage d'un modèle de réduction du bruit temporel d'apprentissage profond en ajustant un ou plusieurs paramètres dans le modèle de réduction du bruit temporel pour minimiser une fonction de perte entre la sortie inversée dans le temps et la sortie causale.

9. Un ou plusieurs supports non transitoires lisibles par ordinateur stockant des instructions exécutables pour exécuter des opérations, les opérations comprenant :
le traitement de données vidéo en utilisant un modèle d'apprentissage profond pour la réduction du bruit temporel ;
la réception d'une trame d'entrée en provenance d'un imageur ;
la récupération d'une pluralité de trames de sortie précédentes à partir d'une mémoire ;
la génération d'un premier ensemble de trames comprenant la trame d'entrée et un premier sous-ensemble de la pluralité de trames de sortie précédentes ;
la génération d'un second ensemble de trames comprenant un second sous-ensemble de la pluralité de trames de sortie précédentes, le second sous-ensemble de trames de sortie précédentes étant différent du premier sous-ensemble ;
l'exécution d'une première instance du modèle de réduction du bruit temporel d'apprentissage profond sur le premier ensemble de trames dans un ordre inversé dans le temps pour générer une sortie inversée dans le temps correspondant aux trames passées et présentes, l'ordre inversé dans le temps étant un ordre de trame plus récent à un ordre de trame plus ancien ;
l'exécution d'une seconde instance du modèle de réduction du bruit temporel d'apprentissage profond sur le second ensemble de trames dans un ordre chronologique pour générer une sortie causale correspondant aux trames futures, l'ordre chronologique étant un ordre de trame plus ancien à un ordre de trame plus récent ; et
l'ajustement des paramètres de réduction du bruit temporel du modèle de réduction du bruit temporel d'apprentissage profond afin de minimiser une fonction de perte entre la sortie inversée dans le temps et la sortie causale, réduisant ainsi le bruit temporel dans un flux vidéo.

10. Un ou plusieurs supports non transitoires lisibles par ordinateur selon la revendication 9, dans lequel l'exécution d'une première instance du modèle de réduction du bruit temporel d'apprentissage profond sur le premier ensemble de trames comprend la détermination d'une valeur de facteur de mélange pour chacune d'une pluralité de régions du premier ensemble de trames.

11. Appareil, comprenant :
un processeur informatique pour exécuter des instructions de programme informatique ; et
une mémoire non transitoire lisible par ordinateur stockant des instructions de programme informatique exécutables par le processeur informatique pour exécuter des opérations comprenant :
le traitement de données vidéo en utilisant un modèle d'apprentissage profond pour la réduction du bruit temporel ;
la réception d'une trame d'entrée en provenance d'un imageur ;
la récupération d'une pluralité de trames de sortie précédentes à partir d'une mémoire ;
la génération d'un premier ensemble de trames comprenant la trame d'entrée et un premier sous-ensemble de la pluralité de trames de sortie précédentes ;
la génération d'un second ensemble de trames comprenant un second sous-ensemble de la pluralité de trames de sortie précédentes, le second sous-ensemble de trames de sortie précédentes étant différent du premier sous-ensemble ;
l'exécution d'une première instance du modèle de réduction du bruit temporel d'apprentissage profond sur le premier ensemble de trames dans un ordre inversé dans le temps pour générer une sortie inversée dans le temps correspondant aux trames passées et présentes, l'ordre inversé dans le temps étant un ordre de trame plus récent à un ordre de trame plus ancien ;
l'exécution d'une seconde instance du modèle de réduction du bruit temporel d'apprentissage profond sur le second ensemble de trames dans un ordre chronologique pour générer une sortie causale correspondant aux trames futures, l'ordre chronologique étant un ordre de trame plus ancien à un ordre de trame plus récent ; et
l'ajustement des paramètres de réduction du bruit temporel du modèle de réduction du bruit temporel d'apprentissage profond afin de minimiser une fonction de perte entre la sortie inversée dans le temps et la sortie causale.

12. Appareil selon la revendication 11, dans lequel les opérations comprennent en outre la réception de la trame d'entrée en provenance de l'imageur comprenant la réception de trames d'image vidéo non étiquetées du monde réel.

13. Appareil selon les revendications 11 à 12, dans lequel les opérations comprennent en outre l'exécution d'une première instance du modèle de réduction du bruit temporel d'apprentissage profond sur le premier ensemble de trames comprenant la détermination d'une valeur de facteur de mélange pour chacune d'une pluralité de régions du premier ensemble de trames.

14. Appareil selon les revendications 11 à 13, dans lequel les opérations comprennent en outre la détermination d'une valeur de facteur de mélange élevée pour des régions respectives dans la pluralité de régions pour lesquelles la région respective dans chaque trame dans le premier ensemble de trames est similaire.

15. Appareil selon les revendications 11 à 14, dans lequel les opérations comprennent en outre la détermination d'une valeur de facteur de mélange faible pour des régions respectives dans la pluralité de régions pour lesquelles la région respective dans chaque trame dans le premier ensemble de trames est différente.
